# EUROPÄISCHE PATENTSCHRIFT

(11) **EP 2 954 498 B1**
(45) Veröffentlichungstag und Bekanntmachung des Hinweises auf die Patenterteilung: **05.04.2023**
(21) Anmeldenummer: 14703350.0
(22) Anmeldetag: 07.02.2014
(51) Int. Cl.: G07C 5/08, H04L 67/12

(54) **VERFAHREN UND VORRICHTUNG ZUM VERBINDEN EINES DIAGNOSEGERÄTS MIT EINEM STEUERGERÄT IN EINEM KRAFTFAHRZEUG**
METHOD AND DEVICE FOR CONNECTING A DIAGNOSTIC UNIT TO A CONTROL UNIT IN A MOTOR VEHICLE
PROCÉDÉ ET DISPOSITIF DE RACCORDEMENT D'UN APPAREIL DE DIAGNOSTIC À UNE UNITÉ DE COMMANDE MONTÉE DANS UN VÉHICULE À MOTEUR

(30) Priorität: 08.02.2013 DE 102013202064
(43) Veröffentlichungstag der Anmeldung: 16.12.2015
(73) Patentinhaber: Bayerische Motoren Werke Aktiengesellschaft, 80809 München (DE)
(72) Erfinder: KICHERER, Max, 80798 München (DE); KÖNIGSEDER, Thomas, 85457 Wilfling Gemeinde Wörth (DE); NEFF, Albrecht, 85716 Unterschleißheim (DE); VÖLKER, Lars, 80687 München (DE)
(86) Internationale Anmeldenummer: PCT/EP2014/052384
(87) Internationale Veröffentlichungsnummer: WO 2014/122243

(56) Entgegenhaltungen:
- WO-A1-2008/025477
- DE-A1-102005 028 663
- DE-A1-102010 008 816
- DE-T2- 69 729 018
- US-A- 6 128 560
- US-A1- 2011 106 374

## Beschreibung

Die Erfindung betrifft ein Verfahren und eine Vorrichtung zum Verbinden eines Diagnosegeräts mit einem Steuergerät in einem Kraftfahrzeug. Die Erfindung betrifft insbesondere die Verbindung eines Diagnosegeräts mit einem Steuergerät in Form einer Netzwerkverbindung.

In heutigen Kraftfahrzeugen ist eine Vielzahl von Steuergeräten vorgesehen, die über Datenbusse miteinander verbunden sind. Als Datenbusse können insbesondere netzwerkfähige Busse vorgesehen sein wie ein Controller Area Netzwerk (CAN) Bus oder ein auf dem Ethernet- oder IP-Standard aufsetzender Bus.

Zur Analyse und Diagnose der Steuergeräte und anderer elektronischer Bauteile eines Kraftfahrzeugs können Aufzeichnungen der über den jeweils zugeordneten Bus übertragenen Daten beispielsweise in Form eines so genannten Datenloggings erfolgen. Die Daten können dann beispielsweise direkt beim Fahrzeug-Hersteller, in einer Serviceorganisation oder in einer Reparaturwerkstatt ausgewertet werden. Dazu werden über den jeweiligen Datenbus versandte Datenpakete mittels eines daran angeschlossenen Lesegeräts ausgelesen und aufgezeichnet. Die ausgelesenen Busdaten können dabei insbesondere in geeigneten Speichern auf einem lokalen Datenlogger oder einem zentralen oder dezentralen bzw. mobilen Computer vorübergehend oder dauerhaft, sowie teilweise bzw. vollständig gespeichert bzw. gespiegelt werden (engl. mirroring). Der Begriff Diagnosedaten umfasst im Folgenden sämtliche auf Bussen von Steuergeräten oder vom Diagnosegerät versandten Daten und somit auch Daten, die nicht explizit für Diagnosezwecke erzeugt werden, sondern z.B. auch im Normalbetrieb des Fahrzeugs durch die Steuergeräte untereinander ausgetauscht werden.

Zum Auslesen von Busdaten wurde unter der Bezeichnung On-Board-Diagnose (OBD) ein Fahrzeug-Diagnosesystem mit einer entsprechenden genormten Steckverbindung standardisiert. Mit dieser Schnittstelle können nicht nur Daten von den jeweiligen Bussen an ein Diagnosegerät übertragen, sondern auch Daten von außen in die Datenbusse des Fahrzeugs gesendet werden. In der DE 10 2009 027 673 A1 ist beispielsweise die Verwendung eines Schnittstellen-Steckers gemäß dem OBD-Standard beschrieben.

Beim vollständigen Auslesen bzw. Protokollieren von Busdaten aus einem Fahrzeug kann eine sehr große Datenmenge entstehen, beispielsweise, wenn im laufenden Fahrzeugbetrieb von einer Vielzahl beteiligter Steuergeräte regelmäßig vollständige Betriebsdaten abgefragt werden. Zudem kann insbesondere beim Übertragen von Betriebsdaten aus Ethernet-Bussen an ein Diagnosegerät das Problem aufgetreten, dass Datenpakete des Ethernet-Busses in ein weiteres Ethernet- bzw. IP-Netzwerk einfließen, an das das Diagnosegerät oder ein fahrzeugseitiges Steuergerät zusätzlich angeschlossen ist. Dies kann beispielsweise ein Unternehmensnetzwerk wie ein Intranet der Reparaturwerkstatt, des Servicedienstleisters oder des Fahrzeug-Herstellers sein oder auch eine Internet-Verbindung, die seitens des Fahrzeugs besteht. Wenn Ethernet-Datenpakete in ein derartiges Netzwerk einfließen, kann dies zu einer Störung bis hin zum Zusammenbruch des weiteren Ethernet-Netzwerks z.B. aufgrund der großen Datenflut oder aufgrund kollidierender Datenpaket-Konventionen oder -Inhalte beim diagnosebedingten Auslesen von Busdaten führen.

Aus der DE 10 2005 028 663 A1 ist ein Verfahren für eine sichere, über eine drahtlose Kommunikationsverbindung erfolgende Kommunikation zwischen einer Fahrzeugkomponente und einem externen Kommunikationspartner bekannt. Für die Kommunikationsverbindung wird ein Kommunikationsstatus ermittelt, anhand dessen entschieden wird, ob der externe Kommunikationspartner mit der Fahrzeugkomponente Daten austauschen darf.

Aus der US 6,128,560 A1 ist ein Verfahren zur Verbindungsaufnahme zwischen einem Diagnosegerät und Fahrzeug-Steuergeräten bekannt, bei dem vom Diagnosegerät initial Signale ausgesandt werden, die eine jeweilige Netzwerkadresse der Steuergeräte umfassen. Das jeweilige Steuergerät sendet daraufhin an das Diagnosegerät eine Information, mit der die Übertragungsrate für die weitere Kommunikation festgelegt wird.

In der US 2011/0106374 A1 ist ein Verfahren beschrieben mittels dessen ein Steuergerät eines Fahrzeugs ferngesteuert über eine drahtlose Schnittstelle wie z.B. eine Mobilfunkschnittstelle oder eine WiFi-Netzwerk-Schnittstelle programmiert werden kann.

Es ist Aufgabe der Erfindung, beim Übertragen von Diagnosedaten von einem in einem Kraftfahrzeug befindlichen Fahrzeugsteuergerät zu einem Diagnosegerät zu verhindern, dass Datenpakete der Diagnosedaten unbeabsichtigt in ein weiteres Netzwerk, an das das Steuergerät oder das Diagnosegerät angeschlossen ist, eindringen.

Diese Aufgabe wird durch die in den unabhängigen Patentansprüchen angegebene Erfindung gelöst. Vorteilhafte Ausführungsformen der Erfindung sind in den abhängigen Ansprüchen angegeben.

Erfindungsgemäß ist zum Verbinden eines Diagnosegeräts mit einem Fahrzeugsteuergerät eines Kraftfahrzeugs über eine Netzwerkverbindung vorgesehen, dass bei der Verbindungsaufnahme zwischen dem Diagnosegerät und dem Fahrzeugsteuergerät eine Überprüfung erfolgt, ob das Diagnosegerät direkt mit dem Fahrzeugsteuergerät verbunden ist und dass das Diagnosegerät nur dann Diagnosedaten von dem Fahrzeugsteuergerät erhält, wenn die Verbindung direkt erfolgt ist.

Mit der Erfindung kann erreicht werden, dass aus Sicht des Kraftfahrzeugs festgestellt wird, ob das Fahrzeug direkt mit dem Diagnosegerät verbunden ist oder indirekt beispielsweise über eine oder mehrere andere Netzwerkkomponenten. Die Erfindung beruht dabei auf der Erkenntnis, dass eine Überprüfung, ob eine solche direkte oder indirekte Verbindung erfolgt, mit vertretbarem Aufwand möglich ist. Andererseits wurde erkannt, dass der Aufwand durch den Vorteil gerechtfertigt wird, dass ein anderes Netzwerk, an das beispielsweise das Diagnosegerät und/oder das Fahrzeugsteuergerät zusätzlich angeschlossen ist, durch die Übertragung von Diagnosedaten zwischen Fahrzeugsteuergerät und Diagnosegerät in großer Menge und mit möglicherweise störenden Datenpaketen, in seiner Funktion nicht gestört wird. Mit der Erfindung kann auch vermieden werden, dass eine irrtümliche oder missbräuchliche Aktivierung des Fahrzeugsteuergeräts zur Ausgabe von Diagnosedaten erfolgt, während das Fahrzeug bzw. Fahrzeugsteuergerät an einem anderen Netzwerk angeschlossen ist. Dadurch kann auch vermieden werden, dass Schaden an einem solchen anderen Netzwerk durch nicht autorisiertes Einspielen von Diagnosedaten entsteht.

Mit der Erfindung kann auch erreicht werden, dass das Fahrzeugsteuergerät mit keinem weiteren, außerhalb des Fahrzeugs befindlichen Netzwerk bzw. netzwerkfähigen Gerät über dieselbe Netzwerkverbindung verbunden ist. Die Erfindung ist besonders vorteilhaft einsetzbar, wenn die Netzwerkverbindung eine Ethernet-Verbindung, eine Wireless Local Area Network (WLAN) Verbindung oder eine andere drahtlose Verbindung, über die Ethernet-Pakete übertragen werden, ist.

Eine direkte Verbindung bzw. Netzwerkverbindung zwischen Fahrzeugsteuergerät und Diagnosegerät im Sinne der Erfindung kann sich beispielsweise durch eine oder mehrere der folgenden Eigenschaften auszeichnen:
- die Verbindung erfolgt nicht mittels eines anderen Netzwerks
- in der Netzwerkverbindung ist nur eine vorgegebene Konfiguration von Koppelelementen (engl. Switches) vorgesehen, beispielsweise
   a) nur eine vorgegebene Anzahl oder maximale Anzahl n von Switches (n>= 0),
   b) nur registrierte Switches,
   c) nur Switches, die nur vorgegebene Schaltbefehle weiter leiten, beispielsweise nur vorgegebene Bridge Protocol Data Units (BPDUs), wenn das Netzwerk ein Ethernet-Netzwerk ist, und andere Schaltbefehle nicht weiterleiten und/oder
   d) nur Switches, die eine bestimmte Konfiguration aufweisen, z.B. bezüglich Virtual Local Area Networks (VLANs), Port-Forwarding oder anderen Switch-Mechanismen.
- In der Netzwerkverbindung befinden sich nur Teilnehmer mit vorgegebenen Internet Protocol (IP) Adressen und/oder Media Access Control (MAC) Adressen. Sobald Teilnehmer mit anderen IP- bzw. MAC-Adressen über die Netzwerkverbindung Daten versenden, gilt die Verbindung bzw. Netzwerkverbindung nicht mehr als direkt.

Eine direkte Verbindung zwischen Fahrzeugsteuergerät und Diagnosegerät kann insbesondere mittels eines zwischen das Fahrzeugsteuergerät und das Diagnosegerät geschalteten Zugangsgeräts hergestellt werden, bei dem das Zugangsgerät eine Schalteinrichtung aufweist, durch die eine Punkt-zu-Punkt-Verbindung zwischen Fahrzeugsteuergerät und Diagnosegerät derart aufbaut, dass nur vorgegebene, aber keine weiteren Netzwerkkomponenten in die Kommunikation der Netzwerkverbindung eingreifen.

In einem ersten bevorzugten Ausführungsbeispiel der Erfindung gibt das Fahrzeugsteuergerät nur dann Diagnosedaten an das Diagnosegerät aus, wenn die Verbindung direkt erfolgt ist. In einem zweiten bevorzugten Ausführungsbeispiel der Erfindung ist zwischen das Diagnosegerät und das Fahrzeugsteuergerät ein Zugangsgerät geschaltet, wobei über dieses gleichwohl eine direkte Verbindung zwischen Diagnosegerät und Fahrzeugsteuergerät im Sinne der Erfindung hergestellt werden kann. In diesem Ausführungsbeispiel gibt das Fahrzeugsteuergerät Diagnosedaten an das Zugangsgerät aus. Das Zugangsgerät leitet die Diagnosedaten aber nur an das Diagnosegerät weiter, wenn die Verbindung zwischen ihm und dem Fahrzeugsteuergerät im Sinne der Erfindung direkt erfolgt ist. Die Verbindung gilt dagegen nicht als direkt und das Zugangsgerät leitet die Diagnosedaten nicht an das Diagnosedaten weiter, wenn das Zugangsgerät über die Netzverbindung mit mindestens einer vom Diagnosegerät unabhängigen und/oder nicht autorisierten Netzwerkkomponente, insbesondere mit einer Vielzahl von vom Diagnosegerät unabhängigen Netzwerkkomponenten verbunden ist. Die Netzwerkkomponenten können insbesondere Switches sein und/oder Komponenten, die mit einer Netzwerkadresse adressierbar sind, beispielsweise Ports, Router oder Server oder andere Komponenten eines Computernetzwerks.

Das Diagnosegerät kann beispielsweise ein Personal Computer, ein Laptop oder ein Datenlogger sein, der die Verbindung zu einem Diagnose-Computer herstellt und/oder die Diagnosedaten in einem eigenen Speicher ablegt. Im Diagnosegerät können die übertragenen und ggf. gespeicherten Diagnosedaten mit entsprechenden Computerprogrammen verarbeitet werden, insbesondere angezeigt werden, analysiert werden und/oder daraus abgeleitete Daten erzeugt werden.

Mit der Erfindung werden insbesondere Kontroll- bzw. Verifizierungs-Mechanismen geschaffen, mit denen sichergestellt werden kann, dass eine direkte Verbindung zwischen Fahrzeugsteuergerät und Diagnosegerät besteht. Die Kontroll- bzw. Verifizierungs-Mechanismen können Maßnahmen in einer oder mehrerer Schichten einer Netzwerkverbindung umfassen, beispielsweise in der physikalischen Schicht, der Sicherungsschicht oder der Vermittlungsschicht nach dem Open Systems Interconnection (OSI) Reference Model.

Gemäß einem ersten Kontroll- bzw. Verifizierungs-Mechanismus, der beispielsweise in der physikalischen Schicht der Netzwerkverbindung ansetzt, wird mindestens ein Charakteristikum der physikalischen Schicht, insbesondere die Übertragungsrate, zwischen den Netzwerk-Schnittstellen des Diagnosegeräts, des Fahrzeugsteuergeräts und/oder des Zugangsgeräts (soweit vorhanden) in einer vorgegebenen zeitlichen Sequenz auf vorgegebene Werte umgeschaltet. Die vollständige Kommunikation zwischen Fahrzeugsteuerung und Diagnosegerät wird dann nur frei gegeben, wenn das Fahrzeugsteuerungsgerät und/oder das Zugangsgerät (soweit vorhanden) die vorgegebene Sequenz empfängt. Dabei schaltet das Diagnosegerät und/oder das Zugangssteuergerät (soweit vorhanden) im Zuge der Verbindungsaufnahme die Datenübertragungsrate zwischen den jeweiligen Netzwerk-Schnittstellen in einer vorgegebenen zeitlichen Sequenz auf vorgegebene Werte um. Das Fahrzeugsteuergerät und/oder das Zugangssteuergerät (soweit vorhanden) gibt die vollständige Kommunikation mit dem Diagnosegerät dann nur frei, wenn es die vorgegebene Sequenz empfängt und entsprechend seiner gespeicherten Kontrollparameter validieren kann.

Gemäß einem zweiten Kontroll- bzw. Verifizierungs-Mechanismus, der in einer höheren Schicht der Netzwerkverbindung ansetzt, beispielsweise in der Sicherungsschicht (Layer 2, Ethernet) oder in der Vermittlungsschicht (Layer 3, IP), werden für die Verifizierung zusätzlich Kommunikationsdaten zwischen dem Diagnosegerät und dem Fahrzeugsteuergerät mit vorgegebenen Inhalten und/oder nach vorgegebenen Kommunikationsregeln ausgetauscht. Beispielsweise kann vorgesehen sein, dass vorgegebene BPDU-Datenpaketinhalte und/oder Datenpakete mit vorgegebenen Netzwerkadressen, insbesondere mit Multicast-Adressen, ausgetauscht werden.

Die Inhalte bzw. Kommunikationsregeln können so gestaltet werden, dass sie im Normalfall nicht von Netzwerk-Switches weitergeleitet werden, d.h., dass sie nur dann beim jeweiligen Zielgerät ankommen, wenn die Verbindung zwischen Diagnosegerät und Fahrzeugsteuergerät direkt ohne Zwischenschaltung von Netzwerk-Switches, insbesondere von regulären Netzwerk-Switches, besteht. Das Zugangsgerät sendet dann beispielsweise nur Diagnosedaten über die Netzwerkverbindung zum Diagnosegerät, wenn es zuvor ein BPDU-Datenpaket erhalten hat, das vom Diagnosegerät ausgesandt wurde und das seiner Art nach nicht von den Netzwerk-Switches weitergeleitet wird.

Die Inhalte bzw. Kommunikationsregeln können auch so gestaltet werden, dass das Fahrzeugsteuergerät die Ausgabe von Diagnosedaten sofort beendet, wenn es über die Netzwerkverbindung Datenpakete enthält, die gemäß ihrem Inhalt oder gemäß der Kommunikationsform von zwischengeschalteten Netzwerk-Switches stammen, d.h., die nicht direkt vom Diagnosegerät an das Fahrzeugsteuergerät übertragen wurden.

Zusätzlich zur Überprüfung, ob eine direkte Netzwerkverbindung besteht, kann vor und/oder während der Übertragung der Diagnosedaten eine kryptografische Autorisierungsprüfung erfolgen. Fahrzeugsteuergerät und Diagnosegerät können dazu jeweils eine Verschlüsselungs- bzw. Entschlüsselungsroutine (Kryptografie-Routine) aufweisen, mit der über die Netzwerkverbindung übertragene Daten verschlüsselt bzw. entschlüsselt werden oder/oder andere Authentifizierungsmechanismen, beispielsweise ein auf einer Signatur basierender Mechanismus, ein Challenge-Response-Verfahren oder ein auf dem Standard IEEE 802.1X basierendes Verfahren zur Authentifizierung von Geräten in einem Netzwerk.

In einer vorteilhaften Ausführungsform der Erfindung weist das Diagnosegerät oder eine zwischen das Diagnosegerät und das Fahrzeugsteuergerät geschaltete Verbindungseinrichtung einen ersten Netzwerkanschluss für die Verbindung zwischen Diagnosegerät und Fahrzeugsteuergerät auf und einen zweiten Netzwerkanschluss desselben Netzwerktyps für die Verbindung mit weiteren Netzwerkgeräten. Der Netzwerktyp kann beispielsweise Ethernet sein. Die Netzwerkanschlüsse können jedoch unterschiedlicher Art sein, z.B. der erste Netzwerkanschluss kabelgebunden und der zweite kabellos und insbesondere ein WLAN Anschluss. Der zweite Netzwerkanschluss ist dabei zumindest temporär physikalisch oder funktionell so von dem ersten Netzwerkanschluss getrennt, dass während dem Bestehen einer Kommunikationsverbindung zwischen Diagnosegerät und Fahrzeugsteuergerät über den ersten Netzwerkanschluss das Diagnosegerät und/oder das Fahrzeugsteuergerät nicht gleichzeitig über den zweiten Netzwerkanschluss kommunizieren kann. Die temporäre physikalische oder funktionelle Trennung kann umschaltbar ausgestaltet sein. Als weitere Netzwerkgeräte können insbesondere Router, Server, Clients, Switches usw. eines größeren Netzwerks, beispielsweise eines Unternehmensnetzwerks, vorgesehen sein.

Im Folgenden werden weitere Ausführungsbeispiele der Erfindung anhand von Figuren näher erläutert. Es zeigen:
Figur 1 ein Fahrzeug mit angeschlossener Diagnoseeinrichtung,
Figur 2 einen Ablauf für die Übertragung von Diagnosedaten und
Figur 3 ein Fahrzeug mit einer über ein Zugangsgerät angeschlossenen Diagnoseeinrichtung.

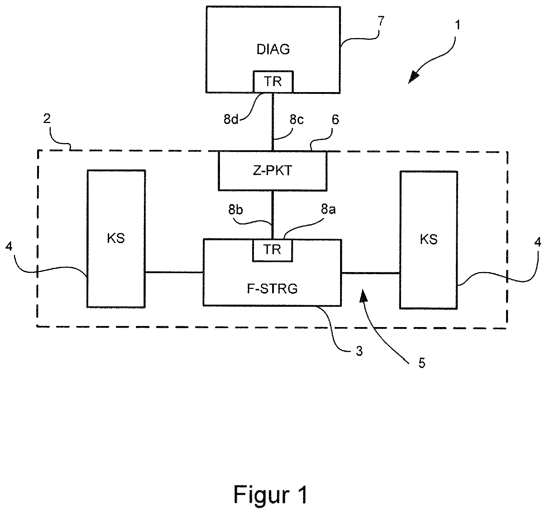

In der in Figur 1 dargestellten Konfiguration 1 ist an einem Kraftfahrzeug 2 ein Diagnosegerät 7 angeschlossen, mit dem vom Kraftfahrzeug 2 ausgegebene Diagnosedaten aufgezeichnet werden können (Data Logging). Die Diagnosedaten werden im Kraftfahrzeug 2 von einer Fahrzeugsteuerung 3 bereitgestellt, welche dazu wiederum entsprechende Daten von verschiedenen Komponenten-Steuergeräten 4 über ein fahrzeuginternes Datennetzwerk 5, beispielsweise über einen CAN-Bus, erhält. Einerseits können die Diagnosedaten von der Fahrzeugsteuerung 3 an das Diagnosegerät 7 übertragen werden. Umgekehrt können auch bestimmte Daten vom Diagnosegerät 7 zur Fahrzeugsteuerung 3 übertragen werden. Diese Übertragung kann in Reaktion auf empfangene Daten geschehen.

In der Fahrzeugsteuerung 3 befindet sich eine Ethernet Netzwerk-Schnittstelle mit einem Ethernet Netzwerk-Treiber 8a. Von der Fahrzeugsteuerung 3 führt ein Netzwerk-Kabel 8b zu einem Zugangspunkt 6, z.B. einer Netzwerk-Buchse, an den wiederum ein Ethernet-Netzwerkkabel 8c angeschlossen ist, das die Netzwerkverbindung zum Diagnosegerät 7 herstellt. Die Netzwerkverbindung zwischen der Fahrzeugsteuerung 3 und dem Diagnosegerät 7 kann statt als Ethernet-Netzwerkkabel zum Beispiel auch als auch kabellose Netzwerkverbindung (WLAN), als Bluetooth-Verbindung oder in einer anderen drahtlosen und/oder Funk-Übertragungstechnologie realisiert sein.

Für die Kommunikation mit der Fahrzeugsteuerung 3 weist das Diagnosegerät 7 einen entsprechenden Netzwerk-Treiber 8d auf. Nach dem Anstecken des Kabels 8c an den Zugangspunkt 6 wird der Zugang des Diagnosegeräts 7 zu der Fahrzeugsteuerung 3 mit einem Befehlskommando aktiviert und die Kommunikation über die Netzwerk-Treiber 8a, 8d gestartet.

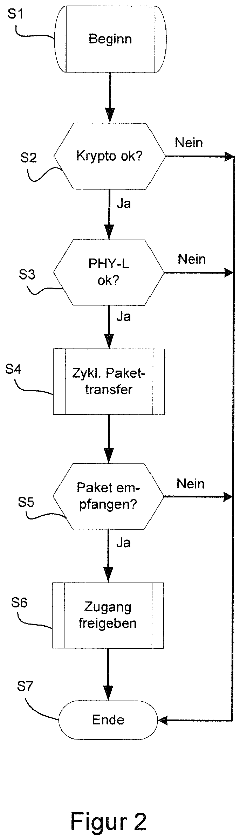

In Figur 2 ist der weitere Kommunikationsablauf gezeigt. Nach dem Kommunikationsstart in einem Schritt S1 wird in einem Authentifizierungsschritt S2 kryptographisch überprüft bzw. verifiziert, ob das Diagnosegerät 7 autorisiert ist, mit der Fahrzeugsteuerung 3 zu kommunizieren. Dazu erwartet die Fahrzeugsteuerung 3, dass das Diagnosegerät 7 einen vorgegebenen Schlüssel an die Fahrzeugsteuerung 3 sendet. Wenn dies nicht der Fall ist, wird die Kommunikation durch die Fahrzeugsteuerung 3 beendet (Schritt S7). Wenn der korrekte Schlüssel bei der Fahrzeugsteuerung 3 eingeht, dann wird die Kommunikation fortgesetzt und im Schritt S3 erfolgt in der physikalischen Schicht der Ethernet-Netzwerkverbindung eine weitere Verifizierung für die Kommunikation zwischen Fahrzeugsteuerung 3 und Diagnosegerät 7. Dazu wird im Diagnosegerät 7 von dem Netzwerk-Treiber 8d die Datenrate des Ethernet-Datenzugangs nach einem vorgegebenen Zeitmuster, z.B. jede Sekunde, zwischen den verschiedenen Übertragungsgeschwindigkeiten, z.B. zwischen 100 MBit/s und 10 MBit/s hin- und her geschaltet. Die Umschaltung der Übertragungsgeschwindigkeit wird von dem fahrzeugseitigen Netzwerk-Treiber 8a erwartet und überprüft. Nur wenn er die Umstellung nach dem vorgegebenen Zeitmuster detektiert, kann die Netzwerkverbindung zwischen Fahrzeugsteuerung 3 und Diagnosegerät 7 als direkte Verbindung freigegeben und zum Schritt S4 übergegangen werden. Wäre das Diagnosegerät 7 netzwerktechnisch nicht direkt an die Fahrzeugsteuerung 3 angeschlossen, sondern über dazwischen geschaltete Netzwerkelemente wie z.B. Switches, Router oder Server und würde das Diagnosegerät 7 in diesem Falle die Übertragungsgeschwindigkeit umstellen, dann würde die Fahrzeugsteuerung 3 dies nicht erkennen, da ein netzwerktechnisch weit von der Fahrzeugsteuerung 3 entfernter Link geändert würde. Damit würde die Fahrzeugsteuerung 3 bzw. der Netzwerk-Treiber 8a den Datenzugang nicht freigeben und die Kommunikation beenden (Schritt S7).

In den Schritten S4 und S5 erfolgt eine weitere Überprüfung, ob eine direkte Verbindung zwischen Fahrzeugsteuerung 3 und Diagnosegerät 7 besteht. Dazu wird im Schritt S5 vom Diagnosegerät 7 zyklisch jede Sekunde ein BPUD-Datenpaket mit der Multicast-Zieladresse 01-80-C2-00-00-01 an die Fahrzeugsteuerung 3 gesandt. Im Schritt S6 wird in der Fahrzeugsteuerung 3 überprüft, ob das BPUD-Datenpaket eingetroffen ist. Ein solches BPUD-Datenpaket würde in einem zwischen Diagnosegerät 7 und Fahrzeugsteuerung 3 geschalteten üblichen Ethernet Netzwerk von dessen Switches nicht weitergegeben werden. Der Empfang dieses BPDU-Datenpakets signalisiert der Fahrzeugsteuerung 3 deshalb ebenfalls, dass eine direkte Verbindung zum Diagnosegerät 7 besteht. Nur wenn die Überprüfungen der Schritte S3 und S5 positive Ergebnisse erbringen, wird im Schritt S6 der Zugang des Diagnosegeräts 7 zur Fahrzeugsteuerung 3 freigegeben um die Diagnosedaten aus der Fahrzeugsteuerung 3 auszulesen.

Wenn der Zugang des Diagnosegeräts 7 zur Fahrzeugsteuerung 3 freigegeben ist, erfolgt weiterhin eine Überwachung der Netzwerkverbindung auf Ereignisse, die eine ordnungsgemäße Übertragung der Diagnosedaten gefährden könnten oder darauf hin deuten, dass die Netzwerkverbindung keine direkte Verbindung mehr ist. Die Überwachung erfolgt vorzugsweise in der Fahrzeugsteuerung 3. Im Fehlerfall stoppt die Fahrzeugsteuerung 3 die Übertragung der Diagnosedaten sofort, insbesondere bei folgenden Ereignissen:
- Im Falle eines Link-Downs, d.h., wenn die Netzwerkverbindung in der physikalischen Schicht vorübergehend oder ganz unterbrochenen wird.
- Im Falle eines Reset oder eines Standby-Zustands des Diagnosegeräts 7.
- Falls in der Fahrzeugsteuerung 3 Ethernet-Datenpakete, insbesondere BPDU-Pakete mit einer Netzwerk-Adresse (MAC-Adresse) empfangen werden, die nicht dem Diagnosegerät 7 zuzuordnen sind bzw. die nicht den entsprechenden, in der Fahrzeugsteuerung 3 hinterlegten Adressen entsprechen. Beispiele solcher BPDU-Pakete sind Spanning Tree Protocol (STP) Pakete oder Cisco Discovery Protocol (CDP) Pakete oder Pakete mit den Multicast-Zieladressen 01-80-C2-00-00-xx (mit xx: 00, 02...0F), die typischerweise als Nachrichten zum Aufbauen von Netzwerkstrukturen in einem Netzwerk mit einer Vielzahl von Netzwerkteilnehmern verwendet werden.

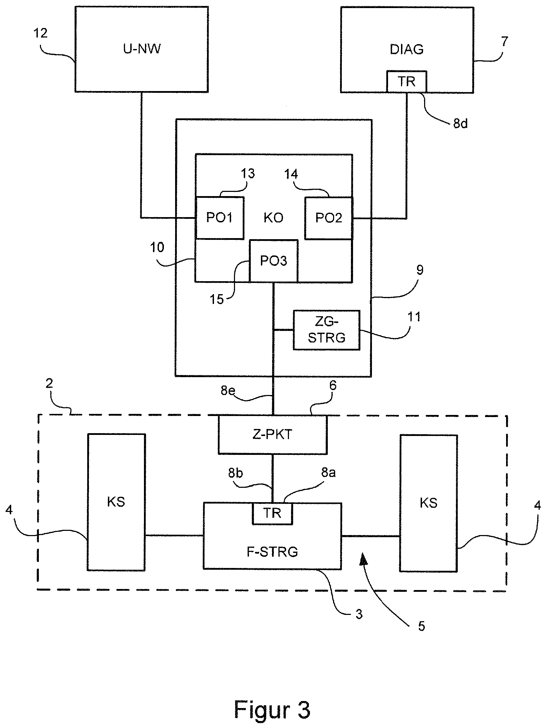

In Figur 3 ist eine zu Figur 1 alternative Konfiguration für ein Kraftfahrzeug 2 mit angeschlossener Diagnoseeinrichtung dargestellt. Die Verbindung zwischen Fahrzeugsteuerung 3 und Diagnosegerät 7 wird dabei über ein Diagnosezugangsgerät 9 hergestellt, das mit einer Leitung 8e unmittelbar an den Zugangspunkt 6 des Kraftfahrzeugs 2 angeschlossen ist. Es weist eine Zugangssteuerung 11 auf, mit der die zu Figur 1 beschriebenen Maßnahmen zur Freigabe der Übertragung der Diagnosedaten durchgeführt werden können. In einer ersten Ausführungsform der Zugangssteuerung 11 können die in Figur 1 beschriebenen Maßnahmen der Fahrzeugsteuerung 3 durchgeführt werden, insbesondere das Freigeben der Übertragung der Diagnosedaten von der Fahrzeugsteuerung 3 zum Diagnosegerät 7. Dies kann beispielsweise erfolgen, wenn das Diagnosegerät 7 zyklisch die Übertragungsgeschwindigkeit der Netzwerkverbindung umschaltet, im Fall der Figur 3 die Übertragungsgeschwindigkeit der Netzwerkverbindung zwischen Diagnosegerät 7 und Diagnosezugangsgerät 9. Das Diagnosezugangsgerät 9 kann alternativ oder zusätzlich nur dann Diagnosedaten über die Netzwerkverbindung zum Diagnosegerät 7 senden, wenn es zuvor ein BPDU-Datenpaket erhalten hat, das vom Diagnosegerät 7 ausgesandt wurde und das seiner Art nach nicht von den Netzwerk-Switches weitergeleitet wird.

In einer zweiten Ausführungsform der Zugangssteuerung 11 kann sie die in Figur 1 beschriebenen Maßnahmen des Diagnosegeräts 7 bewirken, insbesondere das zyklische Umschalten der Übertragungsgeschwindigkeit der Netzwerkverbindung vom Diagnosezugangsgerät 9 zum Zugangspunkt 6. Dadurch kann mit der Zugangssteuerung 11 erreicht werden, dass die Fahrzeugsteuerung 3 die Datenschnittstelle freigibt bzw. aktiviert und Diagnosedaten über die Kopplungsanordnung 10 des Diagnosezugangsgeräts 9 direkt an das Diagnosegerät 7 übertragen werden. Auch in diesem Fall kann alternativ oder zusätzlich vorgesehen sein, dass das Diagnosezugangsgerät 9 nur dann Diagnosedaten über die Netzwerkverbindung zum Diagnosegerät 7 sendet bzw. weiterleitet, wenn es zuvor ein BPDU-Datenpaket erhalten hat, das vom Diagnosegerät 7 ausgesandt wurde und das seiner Art nach nicht von den Netzwerk-Switches weitergeleitet wird.

Die Kopplungsanordnung 10 kann als Filter- und/oder Schaltvorrichtung und insbesondere in Form einer Netzwerk-Switch-Anordnung realisiert sein. Mit der Kopplungsanordnung 10 können Netzwerkverbindungen jeweils über Ports 13, 14, 15 zwischen der Fahrzeugsteuerung 3, dem Diagnosegerät 7 und einem größeren Unternehmensnetzwerk 12 hergestellt werden. Mit der Zugangssteuerung 11 lässt sich die Kopplungsanordnung 10 zudem so einstellen, dass zwischen Fahrzeugsteuerung 3 und Unternehmensnetzwerk 12 eine direkte Netzwerkverbindung aufgebaut wird. Für eine Diagnose und/oder Aufzeichnung von Fahrzeug-Diagnosedaten mittels des Diagnosegeräts 7 wird die Verbindung zwischen Fahrzeugsteuerung 3 und Unternehmensnetzwerk 12 über die Ports 13 und 15 jedoch gesperrt. Somit ist es einerseits möglich, einen Steuerungszugang zum Kraftfahrzeug 2 über das Unternehmensnetzwerk 12 zu schaffen, beispielsweise zum Einspielen von Firmware-Updates in die Fahrzeugsteuerung 3 und/oder in die Komponenten-Steuergeräte 4. Andererseits ist es möglich, eine gegenüber dem Unternehmensnetzwerk 12 abgeschirmte Datenübertragung zwischen Fahrzeugsteuerung 3 und Diagnosegerät 7 durchzuführen und dabei zum Beispiel das Unternehmensnetzwerk 12 sicher gegen eine Überflutung mit Diagnosedaten aus der Fahrzeugsteuerung 3 zu schützen.

Es ist klar, dass wenn zwischen Fahrzeugsteuerung 3 und Diagnosegerät 7 eine direkte Netzwerkverbindung als Punkt-zu-Punkt-Verbindung aufgebaut wird, die vom Unternehmensnetzwerk 12 physikalisch oder steuerungstechnisch getrennt ist, die Verbindungsaufnahme zwischen Fahrzeugsteuerung und Diagnosegerät 7 direkt wie oben zu Figur 1 beschrieben erfolgen kann. Das Diagnosezugangsgerät 9 kann mit der Kopplungsanordnung 10 eine direkte Punkt-zu-Punkt-Netzwerkbindung zwischen Fahrzeugsteuergerät 3 und Diagnosegerät 7 derart aufbauen, dass nur autorisierte Netzwerkkomponenten, insbesondere die Ports 14, 15, in die Kommunikation der Netzwerkverbindung eingreifen, aber keine weiteren Netzwerkkomponenten, insbesondere nicht der Port 13 und keine Komponenten des Unternehmensnetzwerks 12.

Es wurden eine Reihe von Maßnahmen beschrieben um eine direkte Netzwerkverbindung zwischen einer Fahrzeugsteuerung und einem Diagnosegerät aufzubauen, damit ein reibungsloser Austausch von Diagnosedaten möglich ist. Dabei wurden einerseits Maßnahmen zum Überprüfen der Netzwerkverbindung im Zuge ihres Aufbaus angegeben. Zum anderen wurden Maßnahmen zum Überwachen der Netzwerkverbindung nach deren Aufbau angegeben. Es können weitere Maßnahmen vorgesehen werden. Beispielsweise kann vor dem Aufbauen der Netzwerkverbindung seitens der Fahrzeugsteuerung überprüft werden, welche Art von Gerät an dem Netzwerkanschluss angeschlossen wird. Wenn beispielsweise eine Netzwerkkomponente angeschlossen wird, die eine aktive Drahtlos-Verbindung (WLAN) enthält, dann kann vorgesehen werden, den Zugang grundsätzlich zu sperren. Vor oder während der Aktivierung des Datenzugangs können seitens der Fahrzeugsteuerung konkrete Netzwerkkomponenten aktiv gesucht werden, die vorab bekannt sind und mit einer direkten Netzwerk-Verbindung zum Diagnosegerät nicht vereinbar sind, beispielsweise DHCP-Server eines vorab bekannten Unternehmensnetzwerks. Wenn derartige Netzwerkkomponenten gefunden werden, kann der Zugang zur Fahrzeugsteuerung ebenfalls grundsätzlich gesperrt werden. Bezug nehmend auf Figur 2 könnte noch vor dem Schritt S2 geprüft werden, ob eine gesetzesrelevante OBD-Diagnose-Sitzung vorliegt. Um das Verifizieren einer direkten Verbindung zwischen Diagnosegerät und Fahrzeugsteuerung noch weiter abzusichern, könnte, wenn die Zugangsleitung des Diagnosegeräts zum Fahrzeug eine OBD-Leitung ist, vom Diagnosegerät die OBD-Aktivierungsleitung in einem bestimmten Muster auf High-Low-Pegel gelegt werden um zu signalisieren, dass das Diagnosegerät direkt angeschlossen ist. Ebenso wäre eine parallele Signalisierung über einen zusätzlichen, im Zugang verbauten Datenbus (z.B. CAN-Bus) denkbar um über diesen zu signalisieren, dass die Verbindung direkt ist.

Die beschriebenen Geräte und Systemkomponenten werden insbesondere mit Computerprogrammen gesteuert und können dazu weitere, an sich bekannte Elemente von Computern und digitalen Steuerungseinrichtungen wie einen Mikroprozessor, flüchtige und nicht flüchtige Speicher, Schnittstellen usw. aufweisen. Die Erfindung kann deshalb auch ganz oder teilweise in Form eines Computerprogrammprodukts realisiert werden, das beim Laden und Ausführen auf einem Computer einen erfindungsgemäßen Ablauf ganz oder teilweise bewirkt. Es kann beispielsweise in Form eines Datenträgers wie einer CD/DVD bereit gestellt werden oder auch in Form einer oder mehrerer Dateien auf einem Server, von dem das Computerprogramm herunter ladbar ist.

## Patentansprüche

1. Verfahren zum Verbinden eines Diagnosegeräts (7) mit einem Fahrzeugsteuergerät (3) eines Kraftfahrzeugs (2) über eine Netzwerkverbindung, die mehrere Schichten nach dem Open Systems Interconnection (OSI) Reference Models umfasst, wobei eine der Schichten eine physikalische Schicht ist, **dadurch gekennzeichnet, dass**
- bei der Verbindungsaufnahme zwischen dem Diagnosegerät (7) und dem Fahrzeugsteuergerät (3) eine Überprüfung erfolgt, ob das Diagnosegerät (7) direkt mit dem Fahrzeugsteuergerät (3) verbunden ist und dass das Diagnosegerät (7) nur dann Diagnosedaten von dem Fahrzeugsteuergerät (3) erhält, wenn die Verbindung direkt erfolgt ist,
- wobei zur Verifizierung der direkten Verbindung im Zuge der Verbindungsaufnahme das Diagnosegerät (7) mindestens ein Charakteristikum der physikalischen Schicht der Netzwerkverbindung, insbesondere die Übertragungsrate, zwischen den Netzwerk-Schnittstellen (6, 8a, 8d) des Fahrzeugsteuergeräts (3) und des Diagnosegeräts (7) in einer vorgegebenen zeitlichen Sequenz auf vorgegebene Werte umschaltet und das Fahrzeugsteuergerät (3) die vollständige Kommunikation nur freigibt, wenn es die vorgegebene Sequenz empfängt, detektiert und entsprechend seiner gespeicherten Kontrollparameter validieren kann.

2. Verfahren nach Anspruch 1, **dadurch gekennzeichnet, dass** das Fahrzeugsteuergerät (3) keine Diagnosedaten ausgibt, wenn es über die Netzwerkverbindung mit mindestens einer vom Diagnosegerät (7) unabhängigen und/oder nicht autorisierten Netzwerkkomponente, insbesondere mit einer Vielzahl von vom Diagnosegerät (7) unabhängigen Netzwerkkomponenten (12) verbunden ist.

3. Verfahren nach einem der vorher gehenden Ansprüche, **dadurch gekennzeichnet, dass** für die Verifizierung zusätzlich Kommunikationsdaten zwischen dem Diagnosegerät (7) und dem Fahrzeugsteuergerät (3) mit vorgegebenen Inhalten und/oder nach vorgegebenen Kommunikationsregeln ausgetauscht werden.

4. Verfahren nach einem der vorher gehenden Ansprüche, **dadurch gekennzeichnet, dass** die Netzwerkverbindung eine Ethernet-Verbindung, eine WLAN-Verbindung oder eine andere drahtlose Verbindung, über die Ethernet-Pakete übertragen werden, ist.

5. Verfahren nach einem der vorher gehenden Ansprüche, **dadurch gekennzeichnet, dass** ein Netzwerk-Schalter (10) zwischen einer Netzwerk-Schnittstelle (8d) des Diagnosegeräts (7) und einer Netzwerk-Schnittstelle (8a) des Fahrzeugsteuergeräts (3) geschaltet wird, durch die das Diagnosegerät (7) wahlweise entweder mit dem Fahrzeugsteuergerät (3) oder mit mindestens einem anderen Netzwerkgerät (12) verbunden wird.

6. Fahrzeugsteuergerät für ein Kraftfahrzeug, umfassend Mittel zum Durchführen eines Verfahrens nach einem der Ansprüche 1 bis 5.

7. System umfassend das Fahrzeugsteuergerät (3) nach Anspruch 6 und das Diagnosegerät (7).

8. Kraftfahrzeug, umfassend ein Fahrzeugsteuergerät (3) nach Anspruch 6.

## Claims

1. Method for connecting a diagnostic unit (7) to a vehicle controller (3) of a motor vehicle (2) via a network connection that comprises multiple layers in accordance with the Open Systems Interconnection (OSI) reference model, wherein one of the layers is a physical layer, **characterized in that**
- upon connection setup between the diagnostic unit (7) and the vehicle controller (3), a check takes place to determine whether the diagnostic unit (7) is directly connected to the vehicle controller (3) and **in that** the diagnostic unit (7) is provided with diagnosis data from the vehicle controller (3) only when the connection has been made directly,
- wherein, for the purpose of verifying the direct connection in the course of the connection setup, the diagnostic unit (7) changes over at least one characteristic of the physical layer of the network connection, in particular the transmission rate, between the network interfaces (6, 8a, 8b) of the vehicle controller (3) and the diagnostic unit (7) to prescribed values in a prescribed temporal sequence and the vehicle controller (3) enables full communication only if it receives and detects the prescribed sequence and is accordingly able to validate its stored control parameters.

2. Method according to Claim 1, **characterized in that** the vehicle controller (3) outputs no diagnosis data if it is connected via the network connection to at least one network component that is independent of the diagnostic unit (7) and/or that is not authorized, in particular to a multiplicity of network components (12) that are independent of the diagnostic unit (7).

3. Method according to either of the preceding claims, **characterized in that** the verification additionally involves communication data being interchanged between the diagnostic unit (7) and the vehicle controller (3) with prescribed contents and/or according to prescribed communication rules.

4. Method according to one of the preceding claims, **characterized in that** the network connection is an Ethernet connection, a WLAN connection or another wireless connection that is used to transmit Ethernet packets.

5. Method according to one of the preceding claims, **characterized in that** a network switch (10) is connected between a network interface (8d) of the diagnostic unit (7) and a network interface (8a) of the vehicle controller (3), which network interfaces selectively connect the diagnostic unit (7) either to the vehicle controller (3) or to at least one other network unit (12) .

6. Vehicle controller for a motor vehicle, comprising means for performing a method according to one of Claims 1 to 5.

7. System comprising the vehicle controller (3) according to Claim 6 and the diagnostic unit (7).

8. Motor vehicle comprising a vehicle controller (3) according to Claim 6.

## Revendications

1. Procédé pour connecter un appareil de diagnostic (7) à un contrôleur de véhicule (3) d'un véhicule automobile (2) par le biais d'une connexion réseau, laquelle comporte plusieurs couches selon le modèle de référence d'interconnexion de systèmes ouverts (OSI), l'une des couches étant une couche physique, **caractérisé en ce que**
- lors de la prise de connexion entre l'appareil de diagnostic (7) et le contrôleur de véhicule (3), un contrôle est effectué afin de vérifier si l'appareil de diagnostic (7) est connecté directement au contrôleur de véhicule (3) et **en ce que** l'appareil de diagnostic (7) ne reçoit des données de diagnostic du contrôleur de véhicule (3) que lorsque la connexion est réalisée directement,
- en vue de vérifier la connexion directe dans le cadre de la prise de connexion, l'appareil de diagnostic (7) permutant une caractéristique de la couche physique de la connexion réseau, notamment le débit de transmission entre les interfaces de réseau (6, 8a, 8d) du contrôleur de véhicule (3) et de l'appareil de diagnostic (7), dans une séquence chronologique prédéfinie à des valeurs prédéfinies et le contrôleur de véhicule (3) ne libérant la communication complète que s'il reçoit la séquence prédéfinie, la détecte et peut la valider conformément à ses paramètres de contrôle mémorisés.

2. Procédé selon la revendication 1, **caractérisé en ce que** le contrôleur de véhicule (3) ne délivre aucune donnée de diagnostic lorsqu'il est connecté, par le biais de la connexion réseau, à au moins un composant de réseau indépendant de l'appareil de diagnostic (7) et/ou non autorisé, notamment à une pluralité de composants de réseau (12) indépendants de l'appareil de diagnostic (7).

3. Procédé selon l'une des revendications précédentes, **caractérisé en ce que** pour la vérification, des données de communication supplémentaires, ayant des contenus prédéfinis et/ou selon les règles de communication prédéfinies, sont échangées entre l'appareil de diagnostic (7) et le contrôleur de véhicule (3).

4. Procédé selon l'une des revendications précédentes, **caractérisé en ce que** la connexion réseau est une connexion Ethernet, une connexion WLAN ou une autre connexion sans fil par le biais de laquelle sont transmis des paquets Ethernet.

5. Procédé selon l'une des revendications précédentes, **caractérisé en ce qu'**un commutateur de réseau (10) est commuté entre une interface de réseau (8d) de l'appareil de diagnostic (7) et une interface de réseau (8a) du contrôleur de véhicule (3), par le biais duquel l'appareil de diagnostic (7) est connecté sélectivement soit au contrôleur de véhicule (3), soit à au moins un autre appareil de réseau (12).

6. Contrôleur de véhicule pour un véhicule automobile, comprenant des moyens pour mettre en œuvre un procédé selon l'une des revendications 1 à 5.

7. Système comprenant le contrôleur de véhicule (3) selon la revendication 6 et l'appareil de diagnostic (7).

8. Véhicule automobile, comprenant un contrôleur de véhicule (3) selon la revendication 6.
